# EUROPEAN PATENT SPECIFICATION

(11) **EP 2 224 689 B1**
(45) Date of publication and mention of the grant of the patent: **23.05.2012**
(21) Application number: 09153934.6
(22) Date of filing: 27.02.2009
(51) Int. Cl.: H04M 1/02, G06F 1/16, H04M 1/667, E05D 11/06, E05D 11/10

(54) **Handheld electronic device and hinge assembly**
Tragbares elektronisches Gerät und Scharnierbaueinheit
Dispositif électronique portable et assemblage articulé

(43) Date of publication of application: 01.09.2010
(73) Proprietor: Research In Motion Limited, Waterloo, ON N2L 3W8 (CA)
(72) Inventor: Griffin, Jason T., Waterloo Ontario N2L 3W8 (CA)
(74) Representative: Phillips, Emily Elizabeth

(56) References cited:
- EP-A- 1 467 539
- US-A- 5 742 912
- US-A1- 2006 037 175
- US-A1- 2008 157 754

## Description

### BACKGROUND

### Field

The disclosed concept relates generally to handheld electronic devices and, more particularly, to hinge assemblies for handheld electronic devices.

### Description of the Related Art

Numerous types of handheld electronic devices are known. Examples of such handheld devices include, for instance, personal data assistants (PDAs), handheld computers, two-way pagers, cellular telephones, and the like. Many handheld electronic devices also feature wireless communication capability, although many such handheld electronic devices are stand-alone devices that are functional without communication with other devices.

Such handheld electronic devices are generally intended to be portable, and thus are of a relatively compact configuration in which keys and other input structures often perform multiple functions under certain circumstances or may otherwise have multiple aspects or features assigned thereto. With advances in technology, handheld electronic devices are built to have progressively smaller form factors yet have progressively greater numbers of application and features resident thereon.

As a result of their relatively small size, handheld electronic devices can be, and often are, kept in a pocket, a purse, or are otherwise suitably stowed in close proximity to its owner. Under such circumstances, when the handheld electronic device is not in use, it is desirable to protect the keys and/or other features of the device, and to avoid unintentional actuation thereof. To this end, some handheld electronic devices have been designed to include a foldable or flip structure. The housing of such devices generally comprises two portions or halves that are joined by a hinge mechanism and are fordable one on top of the other. However, the hinge mechanisms of foldable handheld electronic devices are generally too small and thus, are not robust enough and are susceptible to damage. Those that are sufficiently robust tend to be excessively large and bulky and, therefore, undesirably protrude from the form factor of the device.

US 2006/0037175 discloses a dual axis hinge apparatus for portable terminal.

US5,742,912 discloses a portable radio telephone set with a rotary selector.

EP 1,467,539 discloses a folding mobile terminal that includes a 2-axis hinge unit.

US 2008/0157754 discloses a swivel portable terminal.

### BRIEF DESCRIPTION OF THE DRAWINGS

A full understanding of the disclosed concept can be gained from the following description of the preferred embodiments when read in conjunction with the accompanying drawings in which:

Figure 1 is a perspective view of an improved handheld electronic device and hinge assembly therefor, in accordance with an embodiment of the disclosed concept;

Figure 2 is a schematic depiction of the handheld electronic device of Figure 1;

Figure 3 is an exploded perspective view of the handheld electronic device and hinge assembly therefor of Figure 1

Figure 4 is another exploded perspective view of the handheld electronic device and hinge assembly therefor of Figure 1;

Figure 5 is a perspective view of the handheld electronic device of Figure 1 shown in the closed position, prior to the hinge assembly being pivoted to substantially conform with the form factor of the device; and

Figure 6 is a perspective view of the handheld electronic device of Figure 3A showing the hinge assembly after being pivoted to substantially conform with the form factor of the device.

Aspects of the invention are defined in the accompanying independent claims. Some optional features of the invention are defined in the dependent claims.

### DESCRIPTION

Directional phrases used herein, such as, for example, upper, lower, left, right, vertical, horizontal, top, bottom, above, beneath, clockwise, counterclockwise and derivatives thereof, relate to the orientation of the elements shown in the drawings and are not limiting upon the claims unless expressly recited therein.

As employed herein, the phrase "form factor" refers to the overall shape and configuration of the handheld electronic device and, in particular, the general shape which is defined by the exterior surface of the housing of the device when the device is disposed in the closed or folded position.

As employed herein, the terms "fastener" and "fastening mechanism" refer to any known or suitable connecting, securing or tightening material, structure or device and expressly includes, but is not limited to tabs, flanges and other suitable protrusions for securing one component to another, as well as receptacles (*e.g*., without limitation, recessses; slots; sockets; grooves), combinations of interlocking protrusions and receptacles, and devices such as pins, rivets, screws, bolts and any suitable combination of bolts, nuts (*e.g*., without limitation, lock nuts) and/or washers.

As employed herein, the statement that two or more parts are "coupled" together shall mean that the parts are joined together either directly or joined through one or more intermediate parts.

As employed herein, the term "number' shall mean one or an integer greater than one.

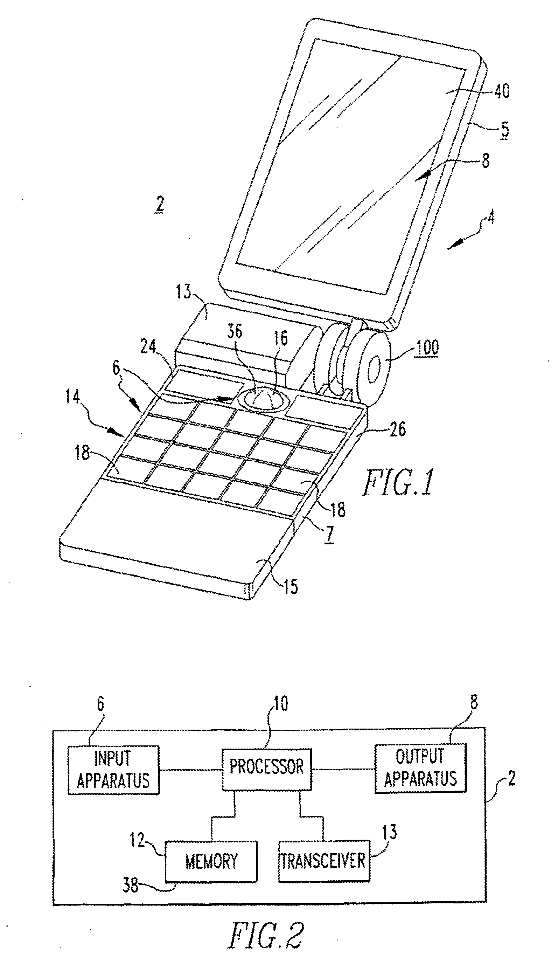

An embodiment of a handheld electronic device 2 in accordance with the disclosed concept is depicted generally in Figure 1 and schematically in Figure 2. The handheld electronic device 2 includes a housing 4 upon which are disposed a processor unit that includes an input apparatus 6, an output apparatus 8, a processor 10, a memory 12, a wireless transceiver 13, and a removable battery portion 15. The processor 10 may be, for example, and without limitation, a microprocessor (µP), and is responsive to inputs from the input apparatus 6 and provides output signals to the output apparatus 8. The processor 10 also interfaces with the memory 12 which contains one or more routines. The processor 10 and the memory 12 together form a processor apparatus.

Referring to Figure 1, the input apparatus 6 includes a keypad 14 and a navigational input member 16. The keypad 14 includes a plurality of keys 18 that serve as input members. Many of the keys 18 each have a plurality of characters assigned thereto. It is noted, that the keypad 14 may be of numerous configurations, such as, without limitation, an AZERTY keyboard, a QWERTY keyboard, a QWERTZ keyboard or another keyboard arrangement, whether or not reduced, and whether presently known or unknown.

The keys 18 are located on a front face 24 of the housing 4, along with the navigational input member 16, which is in the exemplary form of a trackball 36. The trackball 36 is rotatable in various directions thereby allowing for the navigation of a cursor, which may be displayed on the output apparatus 8, in various directions including up, down, left, right, and any combination thereof. Moreover, the trackball 36 can also be depressed to provide a selection or other input based upon the current location of a cursor (not shown). Accordingly, rotation of the trackball 36 can navigate a cursor over a particular program icon, while depression of the trackball 36 can launch the program. It will be appreciated, however, that any known or suitable navigational input member other than the trackball 36 could be employed, without departing from the scope of the disclosed concept. For instance, a touch pad (not shown) input member which could be disposed, for example, on the front face 24 of the housing 4 proximate the keys 18, or a trackwheel (not shown), which could be disposed on a side 26 of the housing 4, can be used in lieu of the trackball 36. Similar to the trackball, the trackwheel can serve as an input member since the trackwheel is capable of being rotated in a clockwise or a counterclockwise direction as well as being depressed. Rotation of the trackwheel can provide a navigation or other input, while depression of the trackwheel can provide a selection or other input. For example, if a cursor is located over a given program icon, that program will be launched when the trackwheel is depressed.

Referring to Figure 2, the memory 12 can be any of a variety of types of internal and/or external storage media such as, without limitation, RAM, ROM, EPROM(s), EEPROM(s), and the like that provide a storage register for data storage such as in the fashion of an internal storage area of a computer, and can be volatile memory or nonvolatile memory. As can be seen from Figure 2, the memory 12 is in electronic communication with the processor 10. The memory 12 additionally can include one or more routines, depicted generally with the numeral 38, for the processing of data. The routines 38 can be in any of a variety of forms such as, for example and without limitation, software, firmware, and the like. The output apparatus 8 includes a display 40. Examples of handheld electronic devices, and the aforementioned features thereof, are included in U.S. Patent Nos. 6,452,588 and 6,489,950.

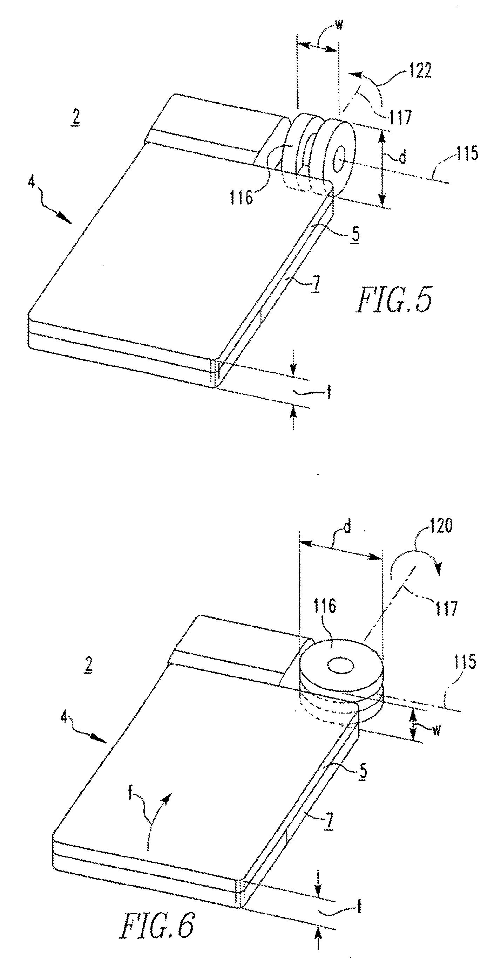

As shown in Figure 1, the handheld electronic device 2 is of the "flip" or "foldable" variety which, as will be described in greater detail hereinbelow, refers to the ability of the device 2 to be operable between an "open" position, such as shown in Figure 1, and a "closed" position, such as shown in Figures 5 and 6. Specifically, the housing 4 of the handheld electronic device 2 generally includes two portions, a first portion 5 and a second portion 7, with the first and second portions 5,7 being pivotally coupled together by way of an improved hinge assembly 100 in accordance with the disclosed concept. Preferably, hinge assembly 1 00 is positioned generally away from a longitudinal centerline of the handheld electronic device 2 and close to one side 26 of housing 4. Accordingly, in the example shown and described herein, the aforementioned output apparatus 8, which is in the exemplary form of a display and is disposed on the first portion 5 of the housing 4, is covered and thus protected by the second portion 7 of the housing 4, which contains the input apparatus 6, when the handheld electronic device 2 is in the "closed" position. It will, however, be appreciated that the aforementioned components of the handheld electronic device 2 and/or additional suitable components (not shown) could be disposed on the first and/or second portions 5,7 of the housing 4 in any suitable alternative configuration (not shown), without departing from the scope of the disclosed concept.

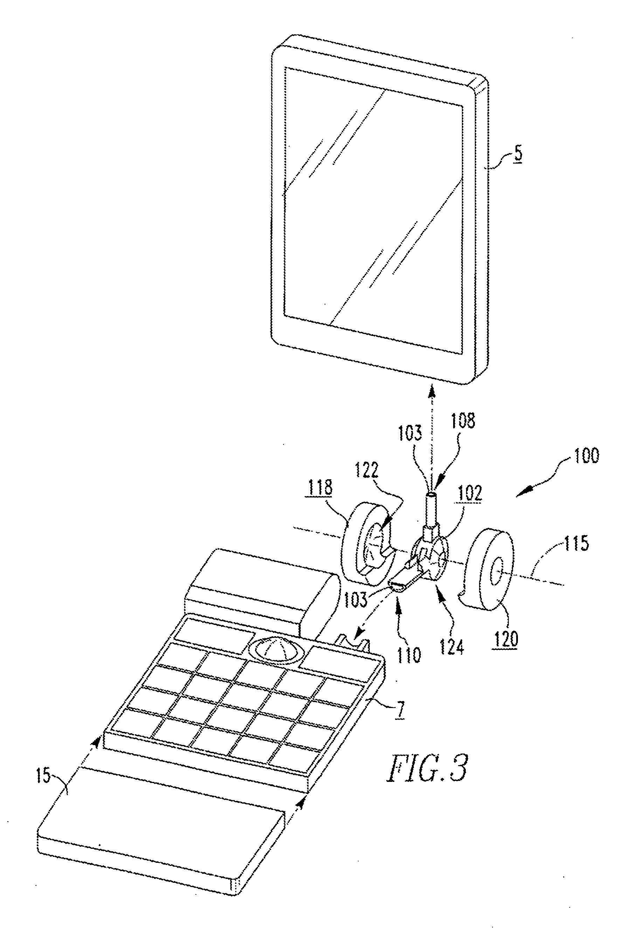

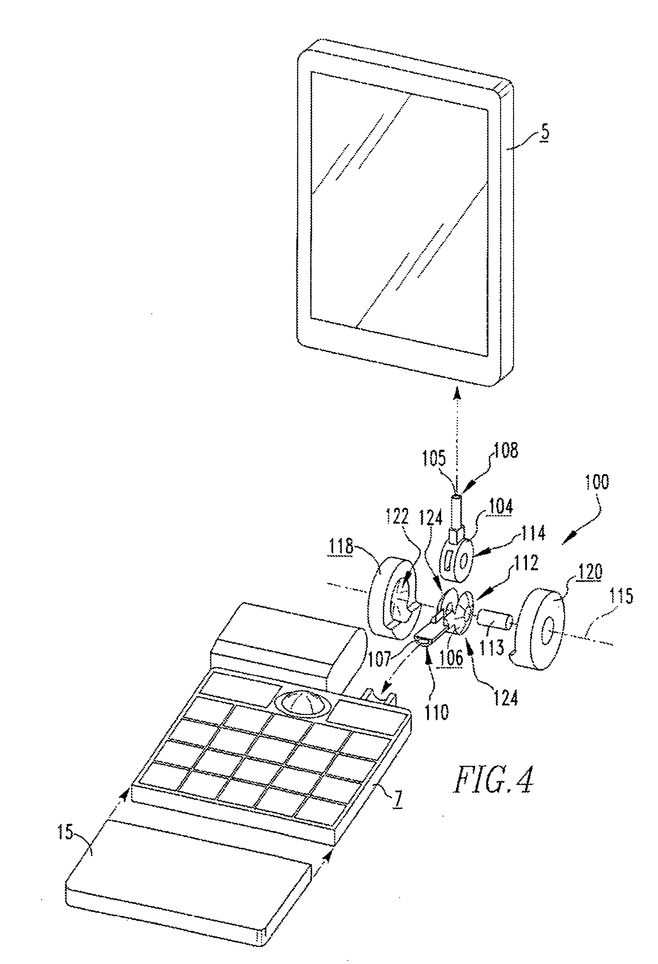

Referring to the exploded views of Figures 3 and 4, the hinge assembly 100 generally includes a primary member 102 (Figure 3) having a first hinge member 104 and a second hinge member 106 (Figure 4). First hinge member 104 includes a first end 108 coupled to the first portion 5 of the housing 4. Such coupling may be fixed or rotatable, as will discussed further below. Second hinge member 106 includes ski first end 110 preferably fixedly coupled to the second portion 7 of the housing 4 and an opposite second end 112 rotatably coupled, such as, without limitation via a pin member 113 to an opposite second end 114 of the first hinge member 104. Such rotatable coupling between the first and second lunge members 104, 106 of the primary member 102 wallows for the first hinge member 104 to pivot with respect to the second hinge member 106 generally about first axis 115. Accordingly, the first portion 5 of the device 2 may "flip" with respect to the second portion 7 about first axis 115, between an "open" position such as shown in Figure 1 and a "closed" position such as shown in Figures 5 and 6.

Referring to Figure 3, the primary member 102 of hinge assembly 100 includes a conduit portion 103 extending generally therethrough. More particularly, conduit portion 103 includes a first conduit portion 105 in first hinge member 104 and a second conduit portion 107 in second hinge member 106, as shown in Figure 4. Such conduits allow for wires to pass between the first and second portions 5,7 of the housing 4.

Referring to Figures 3-6, hinge assembly 100 further includes a secondary member 116 having a width w and depth d. Preferably, the width w is about 40 to 70 percent of the depth and generally equal to the thickness t of the closed housing 4.

In the embodiment depicted in Figures 3 and 4, secondary member 116 includes a first half 118 and a second half 120 coupled together to form secondary member 116. Each of the first and second halves 118,120 preferably include a generally concave region 122 (as shown on first half 118 in Figures 3 and 4). Each of the concave regions 122 are preferably adapted to generally fit a corresponding convex region 124 of second hinge member 106. The concave and convex regions 122,124 are dimensioned to interact simitar to a ball and socket, thus allowing the secondary member 116 to be generally pivotable about the primary member 102 when the first and second hinge members 104,106, and thus the fist and second portions 5,7 of the housing 4, are positioned in the "closed" position, as shown in Figures 5 and 6. More particularly, the secondary member 116 generally pivots, or rotates about axis 117. Preferably, axis 117 is oriented generally perpendicular to axis 115, as shown in Figures 5 and 6.

As shown in Figure 5, when the housing 4 is in the "closed" position, secondary member 116 may be positioned in a first position in which the secondary member 116 of hinge assembly 100 extends beyond the form factor of the handheld electronic device 2. When in such first position, the first and second portions 5,7 of the housing 4 may pivot between the "open" and "close" positions previously discussed.

While the housing 4 is still in the "closed" position, secondary member 116 may be positioned in a second position in which the secondary member 116 of hinge assembly 100 lies within, and thus does not extend beyond, the form factor of the handheld electronic device 2, such as shown in Figure 6. When in such second position the first and second portions 5,7 of the housing 4 are constrained and thus cannot pivot between the "open" and "closed" positions previously discussed. Accordingly, placement of the secondary member 116 in the first position may be termed an "unlocked" position, while placement of the secondary members in any other position, such as the second position, may be termed a "locked" position.

The handheld electronic device 2 may further include a mechanism or sensor (not shown) for determining the position of the secondary member 16. Such sensor may be employed to control various functions of the handheld electronic device 2. For example, without limitation, a user may desire to have an audible ringer setting switched to a vibrate notification when the device 2 is "locked" position (i.e., secondary member 116 is in the "locked" position). Such feature may readily be provided by triggering the switch of notification when it is detected that the secondary member 116 is in the "locked" position.

Positioning of the secondary member 116 among the first and second positions may be readily accomplished by simply rotating or pivoting the secondary member 116 about the second axis 117. For example, to transition from the "unlocked" position to the "locked" position, the secondary member 116 is rotated about the second axis 117 in a direction shown generally by arrow 122 in Figure 5. Conversely, in order to transition from the "locked" position to the "unlocked" position, secondary member 116 is rotated about the second axis 117 in a direction shown generally by arrow 120 in Figure 6.

It is to be readily appreciated that secondary member 116 serves a dual purpose. When positioned in the "unlocked" position, secondary member serves to reinforce and thus strengthen primary member 102, thus providing a robust hinge member 100. Additionally, when in the "locked" position, secondary member 116 acts to secure the first and second portions 5,7 of the housing 4 in the "closed" position thus helping to protect the input apparatus 6 and the output apparatus 8 from undesired contact when not in use.

Although not expressly shown in the Figures, it is to be appreciated that the structure and placement of the hinge assembly 100 may also provide a secondary "flip" feature. More particularly, when first end 108 of first hinge member 104 is rotatably coupled to the first portion 5 of the housing 4, first portion 5 may be allowed to "flip" open from second portion 7 in a direction as shown generally by arrow f in Figure 6. In such embodiment, the first portion 5 would rotate about an axis (not shown) that is generally parallel to, and spaced a slight distance above, second axis 117. Additionally, the rotational coupling of the first end 108 of first hinge member 104 to first portion 5 could also be utilized in conjunction with the pivoting of the first and second hinge members 104,106 to provide various orientations of the first portion 5 of the housing 4 with respect to the second portion 7 when the housing is in an open position.

While specific embodiments of the disclosed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed concept which is to be given the full breadth of the claims appended and any and all equivalents thereof.

## Claims

1. A hinge assembly (100) for a handheld electronic device (2) including a housing (4) having a first portion (5) and a second portion (7), the hinge assembly (100) comprising:
a primary member (102) structured to hingedly couple the first portion (5) to the second portion (7) about a first axis (115), the primary member (102) having a first hinge member (104) and a second hinge member (106), the second hinge member having a convex region (124); and
a secondary member (116) coupled to the primary member (102), the secondary member (116) having a first half (118) and a second half (120), the first half (118) being coupled to the second half (120), each of the first half (118) and the second half (120) having a concave region (122), the concave regions (122) being adapted to fit the convex region (124), the concave regions (122) and the convex region (124) being dimensioned to interact as a ball and socket to allow the secondary member (116) to pivot about the primary member (102) when the first portion (5) and the second portion (7) are in a closed position, the secondary member (116) being adapted to pivot relative to the primary member (102) about a second axis (117) oriented perpendicular to the first axis (115).

2. The hinge assembly (100) of claim 1 wherein the first hinge member (104) is adapted to be coupled to the first portion (5) of the housing (4); wherein the second hinge member (106) is adapted to be coupled to the second portion (7) of the housing (4); and wherein the first hinge member (104) is adapted to pivot relative to the second hinge member (106) about the first axis (115).

3. The hinge assembly (100) of claim 1 wherein the housing (4) of the handheld electronic device (2) has a form factor; and wherein the secondary member (116) is structured to be pivotable between a first position corresponding to the secondary member (116) extending beyond the form factor, and a second position corresponding to the secondary member (116) not extending beyond the form factor.

4. The hinge assembly (100) of claim 1 wherein the hinge assembly (100) has a width (w) and a depth (d); and wherein the width (w) is 40 to 70 percent of the depth (d).

5. The hinge assembly (100) of claim 1 wherein the housing (4) of the handheld electronic device (2) has a longitudinal centerline extending through the first portion (5) of the housing (4) and the second portion (7) of the housing (4); and wherein the hinge assembly (100) is structured to be disposed offset from the longitudinal centerline.

6. The hinge assembly (100) of claim 1 wherein the primary member (102) is structured to house a number of wires passing between the first and second portions (5,7) of the housing (4).

7. The hinge assembly (100) of claim 1 wherein the first hinge member (104) comprises a first conduit portion (105), the second hinge member (106) comprises a second conduit portion (107), and the first conduit (105) portion and the second conduit portion (107) are adapted to house a number of wires passing between the first and second portions (5,7) of the housing (4).

8. A handheld electronic device (2) comprising:
a housing (4) including a first portion (5) and a second portion (7); and
a hinge assembly (100) comprising:
a primary member (102) structured to hingedly couple the first portion (5) to the second portion (7) about a first axis (115), the primary member (102) having a first hinge member (104) and a second hinge member (106), the second hinge member having a convex region (124); and
a secondary member (116) coupled to the primary member (102), the secondary member (116) having a first half (118) and a second half (120), the first half being coupled to the second half (120), each of the first half (118) and the second half (120) having a concave region (122), the concave regions (122) being adapted to fit the convex region (124), the concave regions (122) and the convex region (124) being dimensioned to interact as a ball and socket to allow the secondary member (116) to pivot about the primary member (102) when the first portion (5) and the second portion (7) are in a closed position, the secondary member (116) being adapted to pivot relative to the primary member (102) about a second axis (117) oriented perpendicular to the first axis (115).

9. The handheld electronic device (2) of claim 8 wherein the first hinge member (104) is coupled to the first portion (5) of the housing (4) and the second hinge member (106) is coupled to the second portion (7) of the housing (4); and wherein the first hinge member (104) is adapted to pivot relative to the second hinge member (106) about the first axis (115).

10. The handheld electronic device (2) of claim 8 wherein the housing (4) of the handheld electronic device (2) has a form factor; and wherein the secondary member (116) is structured to be pivotable between a first position corresponding to the secondary member (116) extending beyond the form factor, and a second position corresponding to the secondary member (116) not extending beyond the form factor.

11. The handheld electronic device (2) of claim 8 wherein the hinge assembly (100) has a width (w) and a depth (d); and wherein the width (w) is 40 to 70 percent of the depth (d).

12. The handheld electronic device (2) of claim 8 wherein the housing (4) of the handheld electronic device (2) has a longitudinal centerline extending through the first portion (5) of the housing (4) and the second portion (7) of the housing (4); and wherein the hinge assembly (100) is structured to be disposed offset from the longitudinal centerline.

13. The handheld electronic device (2) of claim 8 wherein the primary member (102) houses a number of wires passing between the first and second portions (5,7) of the housing (4).

14. The handheld electronic device (2) of claim 9 wherein the first hinge member (104) comprises a first conduit portion (105), the second hinge member (106) comprises a second conduit portion (107), and the first conduit portion (105) and the second conduit portion (107) house a number of wires passing between the first and second portions (5,7) of the housing (4).

15. The handheld electronic device (2) of claim 10 wherein the housing (4) comprises a sensor for determining the position of the secondary member (116).

16. The handheld electronic device (2) of claim 15 wherein the housing (4) comprises a processor (10) providing a number of functions, wherein at least one function is determined by the determination of the sensor.

17. A method of securing a handheld electronic device (2)
, the handheld electronic device comprising: a housing (4) including a first portion (5) and a second portion (7); and a hinge assembly (100), the hinge assembly comprising: a primary member (102) structured to hingedly couple the first portion (5) to the second portion (7) about a first axis (115), the primary member (102) having a first hinge member (104) and a second hinge member (106), the second hinge member having a convex region (124); and a secondary member (116) coupled to the primary member (102), the secondary member (116) having a first half (118) coupled to a second half (120), each of the first half (118) and the second half (120) having a concave region (122), the concave regions (122) being adapted to fit the convex region (124), the concave regions (122) and the convex region (124) being dimensioned to interact as a ball and socket to allow the secondary member (116) to pivot about the primary member (102) when the first portion (5) and the second portion (7) are in a closed position, the secondary member (116) being adapted to pivot relative to the primary member (102) about a second axis (117) oriented perpendicular to the first axis (115), the method comprising:
pivoting, from an open position to the closed position, the portion (5) relative to the portion (7); and
pivoting, from an unlocked position to a locked position, the secondary member (116) relative to the primary member (102) about the second axis (117).

## Patentansprüche

1. Gelenk-Baugruppe (100) für eine handgehaltene elektronische Vorrichtung (2) mit einem Gehäuse (4), das einen ersten Teil (5) und einen zweiten Teil (7) hat, wobei die Gelenk-Baugruppe (100) aufweist:
ein primäres Element (102), das strukturiert ist, den ersten Teil (5) mit dem zweiten Teil (7) um eine erste Achse (115) drehbar zu koppeln, wobei das primäre Element (102) ein erstes Gelenkelement (104) und ein zweites Gelenkelement (106) hat, wobei das zweite Gelenkelement einen konvexen Bereich (124) hat; und
ein sekundäres Element (116), das mit dem primären Element (102) gekoppelt ist, wobei das sekundäre Element (116) eine erste Hälfte (118) und eine zweite Hälfte (120) hat, wobei die erste Hälfte (118) mit der zweiten Hälfte (120) gekoppelt ist, wobei jede der ersten Hälfte (118) und der zweiten Hälfte (120) einen konkaven Bereich (122) hat, wobei die konkaven Bereiche (122) ausgebildet sind, mit dem konvexen Bereich (124) zusammenzupassen, wobei die konkaven Bereiche (122) und der konvexe Bereich (124) dimensioniert sind, als ein Ball und eine Fassung zu interagieren, um zu ermöglichen, dass das sekundäre Element (116) um das primäre Element (102) schwenkt, wenn der erste Teil (5) und der zweite Teil (7) in einer geschlossenen Position sind, wobei das sekundäre Element (116) ausgebildet ist, relativ zu dem primären Element (102) um eine zweite Achse (117) zu schwenken, die senkrecht zu der ersten Achse (115) orientiert ist.

2. Gelenk-Baugruppe (100) gemäß Anspruch 1, wobei das erste Gelenkelement (104) ausgebildet ist, mit dem ersten Teil (5) des Gehäuses (4) gekoppelt zu werden; wobei das zweite Gelenkelement (106) ausgebildet ist, mit dem zweiten Teil (7) des Gehäuses (4) gekoppelt zu werden; und wobei das erste Gelenkelement (104) ausgebildet ist, relativ zu dem zweiten Gelenkelement (106) um die erste Achse (115) zu schwenken.

3. Gelenk-Baugruppe (100) gemäß Anspruch 1, wobei das Gehäuse (4) der handgehaltenen elektronischen Vorrichtung (2) einen Formfaktor hat; und wobei das sekundäre Element (116) strukturiert ist, zwischen einer ersten Position, entsprechend das sekundäre Element (116) erstreckt sich über den Formfaktor hinaus, und einer zweiten Position, entsprechend das sekundäre Element (116) erstreckt sich nicht über den Formfaktor hinaus, schwenkbar zu sein.

4. Gelenk-Baugruppe (100) gemäß Anspruch 1, wobei die Gelenk-Baugruppe (100) eine Breite (w) und eine Tiefe (d) hat; und wobei die Breite (w) 40 bis 70 Prozent der Tiefe (d) ist.

5. Gelenk-Baugruppe (100) gemäß Anspruch 1, wobei das Gehäuse (4) der handgehaltenen elektronischen Vorrichtung (2) eine Längsmittellinie hat, die sich durch den ersten Teil (5) des Gehäuses (4) und den zweiten Teil (7) des Gehäuses (4) erstreckt; und wobei die Gelenk-Baugruppe (100) strukturiert ist, versetzt von der Längsmittellinie angeordnet zu werden.

6. Gelenk-Baugruppe (100) gemäß Anspruch 1, wobei das primäre Element (102) strukturiert ist, eine Anzahl von Drähten aufzunehmen, die zwischen den ersten und zweiten Teilen (5, 7) des Gehäuses (4) durchgehen.

7. Gelenk-Baugruppe (100) gemäß Anspruch 1, wobei das erste Gelenkelement (104) einen ersten Leitungsteil (105) aufweist, das zweite Gelenkelement (106) einen zweiten Leitungsteil (107) aufweist, und der erste Leitungsteil (105) und der zweite Leitungsteil (107) ausgebildet sind, eine Anzahl von Drähten aufzunehmen, die zwischen den ersten und zweiten Teilen (5, 7) des Gehäuses (4) durchgehen.

8. Handgehaltene elektronische Vorrichtung (2), die aufweist:
ein Gehäuse (4) mit einem ersten Teil (5) und einem zweiten Teil (7); und
eine Gelenk-Baugruppe (100), die aufweist:
ein primäres Element (102), das strukturiert ist, den ersten Teil (5) mit dem zweiten Teil (7) um eine erste Achse (115) drehbar zu koppeln, wobei das primäre Element (102) ein erstes Gelenkelement (104) und ein zweites Gelenkelement (106) hat, wobei das zweite Gelenkelement einen konvexen Bereich (124) hat; und
ein sekundäres Element (116), das mit dem primären Element (102) gekoppelt ist, wobei das sekundäre Element (116) eine erste Hälfte (118) und eine zweite Hälfte (120) hat, wobei die erste Hälfte mit der zweiten Hälfte (120) gekoppelt ist, wobei jede der ersten Hälfte (118) und der zweiten Hälfte (120) einen konkaven Bereich (122) hat, wobei die konkaven Bereiche (122) ausgebildet sind, mit dem konvexen Bereich (124) zusammenzupassen, wobei die konkaven Bereiche (122) und der konvexe Bereich (124) dimensioniert sind, als ein Ball und eine Fassung zu interagieren, um zu ermöglichen, dass das sekundäre Element (116) um das primäre Element (102) schwenkt, wenn der erste Teil (5) und der zweite Teil (7) in einer geschlossenen Position sind, wobei das sekundäre Element (116) ausgebildet ist, relativ zu dem primären Element (102) um eine zweite Achse (117) zu schwenken, die senkrecht zu der ersten Achse (115) orientiert ist.

9. Handgehaltene elektronische Vorrichtung (2) gemäß Anspruch 8, wobei das erste Gelenkelement (104) mit dem ersten Teil (5) des Gehäuses (4) gekoppelt ist und das zweite Gelenkelement (106) mit dem zweiten Teil (7) des Gehäuses (4) gekoppelt ist; und wobei das erste Gelenkelement (104) ausgebildet ist, relativ zu dem zweiten Gelenkelement (106) um die erste Achse (115) zu schwenken.

10. Handgehaltene elektronische Vorrichtung (2) gemäß Anspruch 8, wobei das Gehäuse (4) der handgehaltenen elektronischen Vorrichtung (2) einen Formfaktor hat; und wobei das sekundäre Element (116) strukturiert ist, zwischen einer ersten Position, entsprechend das sekundäre Element (116) erstreckt sich über den Formfaktor hinaus, und einer zweiten Position, entsprechend das sekundäre Element (116) erstreckt sich nicht über den Formfaktor hinaus, schwenkbar zu sein.

11. Handgehaltene elektronische Vorrichtung (2) gemäß Anspruch 8, wobei die Gelenk-Baugruppe (100) eine Breite (w) und eine Tiefe (d) hat; und wobei die Breite (w) 40 bis 70 Prozent der Tiefe (d) ist.

12. Handgehaltene elektronische Vorrichtung (2) gemäß Anspruch 8, wobei das Gehäuse (4) der handgehaltenen elektronischen Vorrichtung (2) eine Längsmittellinie hat, die sich durch den ersten Teil (5) des Gehäuses (4) und den zweiten Teil (7) des Gehäuses (4) erstreckt; und wobei die Gelenk-Baugruppe (100) strukturiert ist, versetzt von der Längsmittellinie angeordnet zu werden.

13. Handgehaltene elektronische Vorrichtung (2) gemäß Anspruch 8, wobei das primäre Element (102) eine Anzahl von Drähten aufnimmt, die zwischen den ersten und zweiten Teilen (5, 7) des Gehäuses (4) durchgehen.

14. Handgehaltene elektronische Vorrichtung (2) gemäß Anspruch 9, wobei das erste Gelenkelement (104) einen ersten Leitungsteil (105) aufweist, das zweite Gelenkelement (106) einen zweiten Leitungsteil (107) aufweist, und der erste Leitungsteil (105) und der zweite Leitungsteil (107) eine Anzahl von Drähten aufnehmen, die zwischen den ersten und zweiten Teilen (5, 7) des Gehäuses (4) durchgehen.

15. Handgehaltene elektronische Vorrichtung (2) gemäß Anspruch 10, wobei das Gehäuse (4) einen Sensor aufweist zum Bestimmen der Position des sekundären Elements (116).

16. Handgehaltene elektronische Vorrichtung (2) gemäß Anspruch 15, wobei das Gehäuse (4) einen Prozessor (10) aufweist, der eine Anzahl von Funktionen vorsieht, wobei zumindest eine Funktion durch die Bestimmung des Sensors bestimmt wird.

17. Verfahren zum Sichern einer handgehaltenen elektronischen Vorrichtung (2), wobei die handgehaltene elektronische Vorrichtung (2) aufweist: ein Gehäuse (4), das einen ersten Teil (5) und einen zweiten Teil (7) umfasst; und eine Gelenk-Baugruppe (100), wobei die Gelenk-Baugruppe aufweist:
ein primäres Element (102), das strukturiert ist, den ersten Teil (5) mit dem zweiten Teil (7) um eine erste Achse (115) drehbar zu koppeln, wobei das primäre Element (102) ein erstes Gelenkelement (104) und ein zweites Gelenkelement (106) hat, wobei das zweite Gelenkelement einen konvexen Bereich (124) hat; und ein sekundäres Element (116), das mit dem primären Element (102) gekoppelt ist, wobei das sekundäre Element (116) eine erste Hälfte (118) gekoppelt mit einer zweiten Hälfte (120) hat, wobei jede der ersten Hälfte (118) und der zweiten Hälfte (120) einen konkaven Bereich (122) hat, wobei die konkaven Bereiche (122) ausgebildet sind, mit dem konvexen Bereich (124) zusammenzupassen, wobei die konkaven Bereiche (122) und der konvexe Bereich (124) dimensioniert sind, als ein Ball und eine Fassung zu interagieren, um zu ermöglichen, dass das sekundäre Element (116) um das primäre Element (102) schwenkt, wenn der erste Teil (5) und der zweite Teil (7) in einer geschlossenen Position sind, wobei das sekundäre Element (116) ausgebildet ist, relativ zu dem primären Element (102) um eine zweite Achse (117) zu schwenken, die senkrecht zu der ersten Achse (115) orientiert ist, wobei das Verfahren aufweist:
Schwenken, von einer offenen Position in die geschlossene Position, des Teils (5) relativ zu dem Teil (7); und
Schwenken, von einer entsperrten Position in eine gesperrte Position, des sekundären Elements (116) relativ zu dem primären Element (102) um die zweite Achse (117).

## Revendications

1. Ensemble de charnière (100) pour un dispositif électronique portable (2) comprenant un boîtier (4) comportant une première partie (5) et une deuxième partie (7), l'ensemble de charnière (100) comprenant :
un élément primaire (102) structuré de façon à coupler de façon articulée la première partie (5) à la deuxième partie (7) autour d'un premier axe (115), l'élément primaire (102) comportant un premier élément de charnière (104) et un deuxième élément de charnière (106), le deuxième élément de charnière comportant une région convexe (124) ; et
un élément secondaire (116) couplé à l'élément primaire (102), l'élément secondaire (116) comportant une première moitié (118) et une deuxième moitié (120), la première moitié (118) étant couplée à la deuxième moitié (120), chacune de la première moitié (118) et de la deuxième moitié (120) comportant une région concave (122), les régions concaves (122) étant adaptées de façon à s'adapter à la région convexe (124), les régions concaves (122) et la région convexe (124) étant dimensionnées de façon à interagir comme une bille et une douille afin de permettre à l'élément secondaire (116) de pivoter autour de l'élément primaire (102) lorsque la première partie (5) et la deuxième partie (7) sont dans une position fermée, l'élément secondaire (116) étant adapté de façon à pivoter par rapport à l'élément primaire (102) autour d'un deuxième axe (117) orienté perpendiculairement au premier axe (115).

2. Ensemble de charnière (100) selon la revendication 1, dans lequel le premier élément de charnière (104) est adapté de façon à être couplé à la première partie (5) du boîtier (4) ; dans lequel le deuxième élément de charnière (106) est adapté de façon à être couplé à la deuxième partie (7) du boîtier (4) ; et dans lequel le premier élément de charnière (104) est adapté de façon à pivoter par rapport au deuxième élément de charnière (106) autour du premier axe (115).

3. Ensemble de charnière (100) selon la revendication 1, dans lequel le boîtier (4) du dispositif électronique portable (2) a un facteur de forme ; et dans lequel l'élément secondaire (116) est structuré de façon à pouvoir pivoter entre une première position correspondant à l'élément secondaire (116) qui s'étend au-delà du facteur de forme, et une deuxième position correspondant à l'élément secondaire (116) qui ne s'étend pas au-delà du facteur de forme.

4. Ensemble de charnière (100) selon la revendication 1, dans lequel l'ensemble de charnière (100) a une largeur (w) et une profondeur (d) ; et dans lequel la largeur (w) est comprise entre 40 et 70 pour cent de la profondeur (d).

5. Ensemble de charnière (100) selon la revendication 1, dans lequel le boîtier (4) du dispositif électronique portable (2) comporte une ligne centrale longitudinale s'étendant à travers la première partie (5) du boîtier (4) et la deuxième partie (7) du boîtier (4) ; et dans lequel l'ensemble de charnière (100) est structuré de façon à être disposé en décalage par rapport à la ligne centrale longitudinale.

6. Ensemble de charnière (100) selon la revendication 1, dans lequel l'élément primaire (102) est structuré de façon à renfermer un certain nombre de fils passant entre les première et deuxième parties (5, 7) du boîtier (4).

7. Ensemble de charnière (100) selon la revendication 1, dans lequel le premier élément de charnière (104) comprend une première partie de conduit (105), le deuxième élément de charnière (106) comprend une deuxième partie de conduit (107), et la première partie de conduit (105) et la deuxième partie de conduit (107) sont adaptées de façon à renfermer un certain nombre de fils passant entre les première et deuxième parties (5, 7) du boîtier (4).

8. Dispositif électronique portable (2), comprenant :
un boîtier (4) comprenant une première partie (5) et une deuxième partie (7) ; et
un ensemble de charnière (100) comprenant :
un élément primaire (102) structuré de façon à coupler de façon articulée la première partie (5) à la deuxième partie (7) autour d'un premier axe (115), l'élément primaire (102) comportant un premier élément de charnière (104) et un deuxième élément de charnière (106), le deuxième élément de charnière comportant une région convexe (124) ; et
un élément secondaire (116) couplé à l'élément primaire (102), l'élément secondaire (116) comportant une première moitié (118) et une deuxième moitié (120), la première moitié (118) étant couplée à la deuxième moitié (120), chacune de la première moitié (118) et de la deuxième moitié (120) comportant une région concave (122), les régions concaves (122) étant adaptées de façon à s'adapter à la région convexe (124), les régions concaves (122) et la région convexe (124) étant dimensionnées de façon à interagir comme une bille et une douille afin de permettre à l'élément secondaire (116) de pivoter autour de l'élément primaire (102) lorsque la première partie (5) et la deuxième partie (7) sont dans une position fermée, l'élément secondaire (116) étant adapté de façon à pivoter par rapport à l'élément primaire (102) autour d'un deuxième axe (117) orienté perpendiculairement au premier axe (115).

9. Dispositif électronique portable (2) selon la revendication 8, dans lequel le premier élément de charnière (104) est couplé à la première partie (5) du boîtier (4) et le deuxième élément de charnière (106) est couplé à la deuxième partie (7) du boîtier (4) ; et dans lequel le premier élément de charnière (104) est adapté de façon à pivoter par rapport au deuxième élément de charnière (106) autour du premier axe (115).

10. Dispositif électronique portable (2) selon la revendication 8, dans lequel le boîtier (4) du dispositif électronique portable (2) a un facteur de forme ; et dans lequel l'élément secondaire (116) est structuré de façon à pouvoir pivoter entre une première position correspondant à l'élément secondaire (116) qui s'étend au-delà du facteur de forme, et une deuxième position correspondant à l'élément secondaire (116) qui ne s'étend pas au-delà du facteur de forme.

11. Dispositif électronique portable (2) selon la revendication 8, dans lequel l'ensemble de charnière (100) a une largeur (w) et une profondeur (d) ; et dans lequel la largeur (w) est comprise entre 40 et 70 pour cent de la profondeur (d).

12. Dispositif électronique portable (2) selon la revendication 8, dans lequel le boîtier (4) du dispositif électronique portable (2) comporte une ligne centrale longitudinale s'étendant à travers la première partie (5) du boîtier (4) et la deuxième partie (7) du boîtier (4) ; et dans lequel l'ensemble de charnière (100) est structuré de façon à être disposé en décalage par rapport à la ligne centrale longitudinale.

13. Dispositif électronique portable (2) selon la revendication 8, dans lequel l'élément primaire (102) renferme un certain nombre de fils passant entre les première et deuxième parties (5, 7) du boîtier (4).

14. Dispositif électronique portable (2) selon la revendication 9, dans lequel le premier élément de charnière (104) comprend une première partie de conduit (105), le deuxième élément de charnière (106) comprend une deuxième partie de conduit (107), et la première partie de conduit (105) et la deuxième partie de conduit (107) renferment un certain nombre de fils passant entre les première et deuxième parties (5, 7) du boîtier (4).

15. Dispositif électronique portable (2) selon la revendication 10, dans lequel le boîtier (4) comprend un capteur pour déterminer la position de l'élément secondaire (116).

16. Dispositif électronique portable (2) selon la revendication 15, dans lequel le boîtier (4) comprend un processeur (10) assurant un certain nombre de fonctions, au moins une fonction étant déterminée par la détermination du capteur.

17. Procédé de fixation d'un dispositif électronique portable (2), le dispositif électronique portable comprenant : un boîtier (4) comprenant une première partie (5) et une deuxième partie (7) ; et un ensemble de charnière (100), l'ensemble de charnière comprenant : un élément primaire (102) structuré de façon à coupler de façon articulée la première partie (5) à la deuxième partie (7) autour d'un premier axe (115), l'élément primaire (102) comportant un premier élément de charnière (104) et un deuxième élément de charnière (106), le deuxième élément de charnière comportant une région convexe (124) ; et un élément secondaire (116) couplé à l'élément primaire (102), l'élément secondaire (116) comportant une première moitié (118) couplée à une deuxième moitié (120), chacune de la première moitié (118) et de la deuxième moitié (120) comportant une région concave (122), les régions concaves (122) étant adaptées de façon à s'adapter à la région convexe (124), les régions concaves (122) et la région convexe (124) étant dimensionnées de façon à interagir comme une bille et une douille afin de permettre à l'élément secondaire (116) de pivoter autour de l'élément primaire (102) lorsque la première partie (5) et la deuxième partie (7) sont dans une position fermée, l'élément secondaire (116) étant adapté de façon à pivoter par rapport à l'élément primaire (102) autour d'un deuxième axe (117) orienté perpendiculairement au premier axe (115), le procédé comprenant :
le fait de faire pivoter, d'une position ouverte à la position fermée, la partie (5) par rapport à la partie (7) ; et
le fait de faire pivoter, d'une position déverrouillée à une position verrouillée, l'élément secondaire (116) par rapport à l'élément primaire (102) autour du deuxième axe (117).
